# EUROPÄISCHE PATENTANMELDUNG

(11) **EP 0 981 148 A2**
(43) Veröffentlichungstag der Anmeldung: **23.02.2000**
(21) Anmeldenummer: 99810705.6
(22) Anmeldetag: 06.08.1999
(51) Int. Cl.: H01H 71/32, H02H 3/05

(54) **Auslösevorrichtung für einen Schutzschalter, Insbesondere einen Fehlerstrom-Schutzschalter**

(30) Priorität: 17.08.1998 DE 19837059
(71) Anmelder: CMC Carl Maier + Cie AG, 8200 Schaffhausen (CH)
(72) Erfinder: Mayer, Siegfried, 78244 Gottmadingen 2 (DE); Mühle, Peter, 8200 Schaffhausen (CH); Neth, Peter, 8964 Rufolfstetten (CH); Schneider, Gerhard, 78176 Blumberg (DE); Schwarz, Willy, 8476 Unterstammheim (CH)
(74) Vertreter: Kaiser, Helmut, Dr.

(57) **Zusammenfassung**

Die Auslösevorrichtung ist für einen Schutzschalter, insbesondere einen Fehlerstrom-Schutzschalter, bestimmt und weist einen auf einem Joch (9) aufsitzenden, federbelasteten beweglichen Anker (5), ein mit dem Anker (5) gekoppeltes Betätigungselement (4) und einen Notauslöser (17) auf. Der Notauslöser (17) ist unabhängig vom Anker (5) auslösbar ausgebildet.

Ein derartiger Auslöser zeichnet sich durch eine besonders hohe Redundanz auf, da er auch dann mit grosser Sicherheit auslöst, wenn der Anker (5) auf dem Joch (5) durch Verkleben festgesetzt ist.

## Beschreibung

### TECHNISCHES GEBIET

Bei der Erfindung wird ausgegangen von einer Auslösevorrichtung für einen Schutzschalter, insbesondere einen Fehlerstrom-Schutzschalter (FI-Schalter), nach dem Oberbegriff von Patentanspruch 1. Ein solche Auslösevorrichtung weist einen konstanten magnetischen Dauerfluss führenden magnetischen Kreis mit einem feststehenden Joch und einem beweglichen Anker auf sowie eine auf den magnetischen Kreis wirkende Auslösespule. In die Auslösespule wird beim Auftreten einer Auslösegrösse, etwa eines Fehlerstroms, ein Signal eingespeist. Dieses Eingangssignal erzeugt in der Auslösespule einen magnetischen Fluss, welcher den magnetischen Dauerfluss am Ort des Ankers schwächt. Der von einer vorgespannten Feder belastete Anker wird bei der Schwächung des magnetischen Dauerflusses vom Joch abgehoben und löst ein Übertragungselement zur mechanischen Betätigung eines Gerätes aus (Halte- oder Haftmagnetprinzip). Bei einem FI-Schalter wirkt das Übertragungselement auf ein Schaltschloss, welches ein Öffnen der Kontaktanordnung des FI-Schalters bewirkt. Das der Auslösespule zugeführte Eingangssignal ist hierbei proportional dem Fehlerstrom und wird von einem Summenstromwandler des FI-Schalters gebildet.

### STAND DER TECHNIK

Die Erfindung nimmt auf einen Stand der Technik von Auslösevorrichtungen für Schutzschalter Bezug wie er in DE 195 43 212 A1 beschrieben ist. Eine in diesem Stand der Technik beschriebene Auslösevorrichtung enthält einen Magnetauslöser, welcher beim Auftreten eines Fehlerstroms über einen Summenstromwandler, einen magnetischen Kreis und ein Stössel auf ein Schaltwerk eines FI-Schalters wirkt, sowie einen mit einem piezo- oder magnetostriktiven Aktor versehenen Notauslöser. Der Aktor wirkt auf einen Anker des von einem Permanentmagneten gespeisten magnetischen Kreises. Sollte der Anker nach jahrelangem Gebrauch mit einem Joch des magnetischen Kreises kaltverschweisst sein, so kann der mit grosser Kraft auf den Anker wirkende Aktor die Kaltverschweissung aufheben.

Eine weitere Auslösevorrichtung für einen Schutzschalter ist in DE 38 23 101 A1 angegeben. Eine in diesem Stand der Technik beschriebene Ausführungsform der Auslösevorrichtung enthält ein nach dem zuvor beschriebenen Halte- oder Haftmagnetprinzip beschriebenes Auslöserelais, dessen Anker mit dem Anker eines Arbeitsrelais in Auslöserichtung gekoppelt ist. Der so gebildete Verbundanker wirkt über ein Koppelglied mit einer Entklinkungsvorrichtung eines Schaltschlosses des Schutzschalters zusammen. Bei dieser Vorrichtung ist eine Auslösung im allgemeinen dann sichergestellt, wenn entweder das Auslöserelais oder das Arbeitsrelais anspricht. Zu schützende Verbraucher und Einrichtungen können so redundant geschützt werden.

In EP 0 829 896 A2 ist ein Magnetauslöser für einen FI-Schalter beschrieben, welcher einen um eine Kippkante drehbar Klappanker aufweist sowie eine oder zwei den Klappanker mit Vorspannkraft beaufschlagende zylindrische Schraubenfedem, deren Zylinderachsen längs der Kippkante ausgerichtet sind. Dieser Magnetauslöser zeichnet sich bei einfachem Aufbau und geringer Anzahl an Bauteilen durch eine grosse Erschütterungsfestigkeit und eine gute Einstellbandbreite aus.

### KURZE DARSTELLUNG DER ERFINDUNG

Der Erfindung, wie sie in den Patentansprüchen angegeben ist, liegt die Aufgabe zugrunde, die Redundanz der eingangs genannten Auslösevorrichtung zu erhöhen.

Bei der Auslösevorrichtung nach der Erfindung wirkt der Notauslöser unabhängig vom Anker auf das Betätigungselement. Unabhängig von Festsetzen des Ankers auf dem Joch, etwa durch unerwünschte Fremdpartikel (Verkleben) oder durch Kaltverschweissen, ist so stets mit grosser Sicherheit gewährleistet, dass die Vorrichtung nach der Erfindung auslöst.

### KURZE BESCHREIBUNG DER ZEICHNUNG

Ein bevorzugtes Ausführungsbeispiel der Erfindung und die damit erzielbaren weiteren Vorteile werden nachfolgend anhand von Zeichnungen näher erläutert. Hierbei zeigt:
- Fig.1: eine perspektivische Ansicht einer ersten Ausführungsform einer Auslösevorrichtung nach der Erfindung nach dem Entfernen eines Teils seines Vorrichtungsgehäuses vor einem Auslösevorgang,
- Fig.2: eine in Richtung eines Pfeils II geführte Aufsicht auf die Auslösevorrichtung gemäss Fig.1, und
- Fig.3: Aufsicht auf eine geringfügig abgewandelte zweite Auslösevorrichtung nach der Erfindung.

### WEGE ZUR AUSFÜHRUNG DER ERFINDUNG

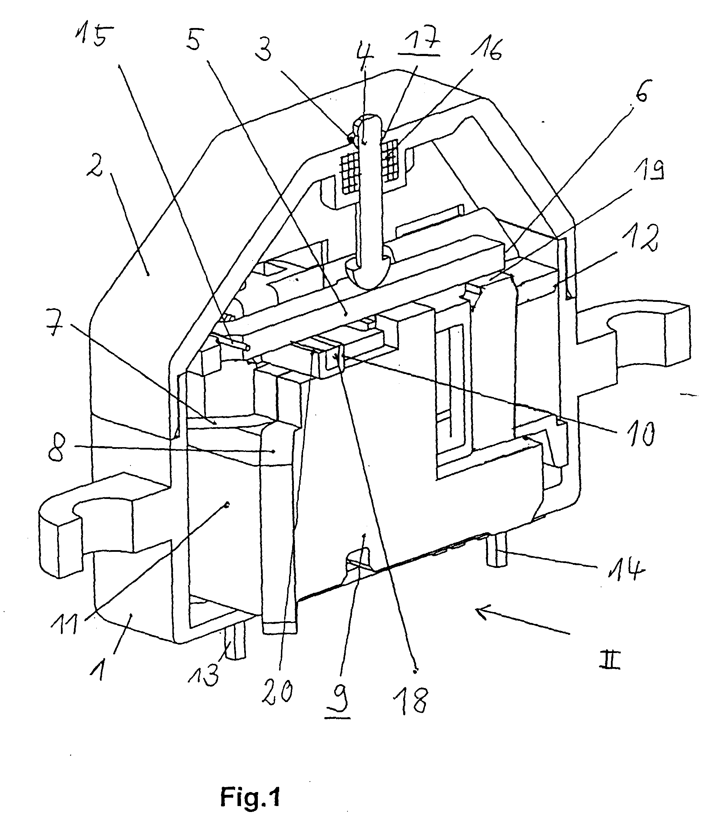

In allen Figuren beziehen sich gleiche Bezugszeichen auf gleichwirkende Teile. Die in den Figuren 1 bis 3 dargestellten Auslösevorrichtungen weisen jeweils ein aus einem wannenförmigen Boden 1 und einem Deckel 2 bestehendes Isolierstoffgehäuse auf. Im Deckel 2 ist eine Öffnung 3 vorgesehen, welche der vertikalen Führung eines im wesentlichen zylinderförmigen Betätigungselementes 4 dient. Das Betätigungselement 4 ist zumindest teilweise von einem Ferromagnetikum gebildet und weist ein verdicktes unteres Ende auf, welches auf einem quaderförmig ausgebildeten Anker 5 eines magnetischen Kreises 6 aufsitzt. Das nach oben gerichtete Ende des Betätigungselements 4 wirkt über ein nicht dargestelltes Schaltschloss auf eine ebenfalls nicht dargestellte Kontaktanordnung eines als FI - Schalters ausgebildeten Schutzschalters.

Der magnetische Kreis weist ferner ein zwei Bleche 7, 8 enthaltendes, U-förmig ausgebildetes Joch 9 auf. Die beiden Jochbleche sind mit Hilfe eines aus nichtmagnetischem Material, beispielsweise einer Nickellegierung, bestehenden Bolzens 10 etwa durch Schweissen in einem Abstand von typischerweise 50 bis 100 µm zueinander fixiert. Durch zusätzliche magnetisch nichtleitende Schweiss-, Löt- und/oder Klebstellen kann die mechanische Stabilität des Jochs 9 erhöht werden. Der durch den Abstand gebildete Luftspalt übernimmt die Funktion eines sonst üblicherweise verwendeten, folienförmig ausgebildeten Diaphragmas.

Die beiden Jochbleche 7, 8 sind jeweils derart abgewinkelt, dass das Joch 9 im Bereich der Abwinkelung V-Form aufweist. Zwischen den beiden Schenkeln des V ist ein als Prismatoid geformter Permanentmagnet 11 mit ebenen Polflächen angeordnet. Die beiden Polfläche liegen jeweils an je einem der beiden Schenkel des V an.

Auf einem vom Jochblech 7 gebildeten Schenkel des U ist eine von einem elektrischen Signal erregbare Auslösespule 12 gesteckt. Diese Auslösespule wird mit Hilfe von zwei durch den Boden 1 geführten Stromanschlüssen 13, 14 mit elektrischer Leistung versorgt, welche beim Auftreten eines Fehlerstroms in einem nicht dargestellten Summenstromwandler gebildet wird. Mit dem Bezugszeichen 15 ist ein Federelement bezeichnet, welches den Anker 5 vor dem Auslösen des Magnetauslösers mit einer Vorspannkraft belastet.

In den Deckel 2 des Isolierstoffgehäuses ist eine Spule 16 eingeformt. Dieser Spule wird ein elektrisches Signal zugeführt, das beim Auftreten eines Fehlerstroms in einem nicht dargestellten weiteren Summenstromwandler gebildet und in einem ebenfalls nicht dargestellten nachgeschalteten, netzspannungsabhängigen Verstärker verstärkt wird. Das Betätigungselement 4 und die Spule 16 stellen einen als Schlagankersystem ausgebildeten Notauslöser 17 dar, welcher unabhängig vom Anker 5 beim Auftreten des Fehlerstroms auslösbar ist.

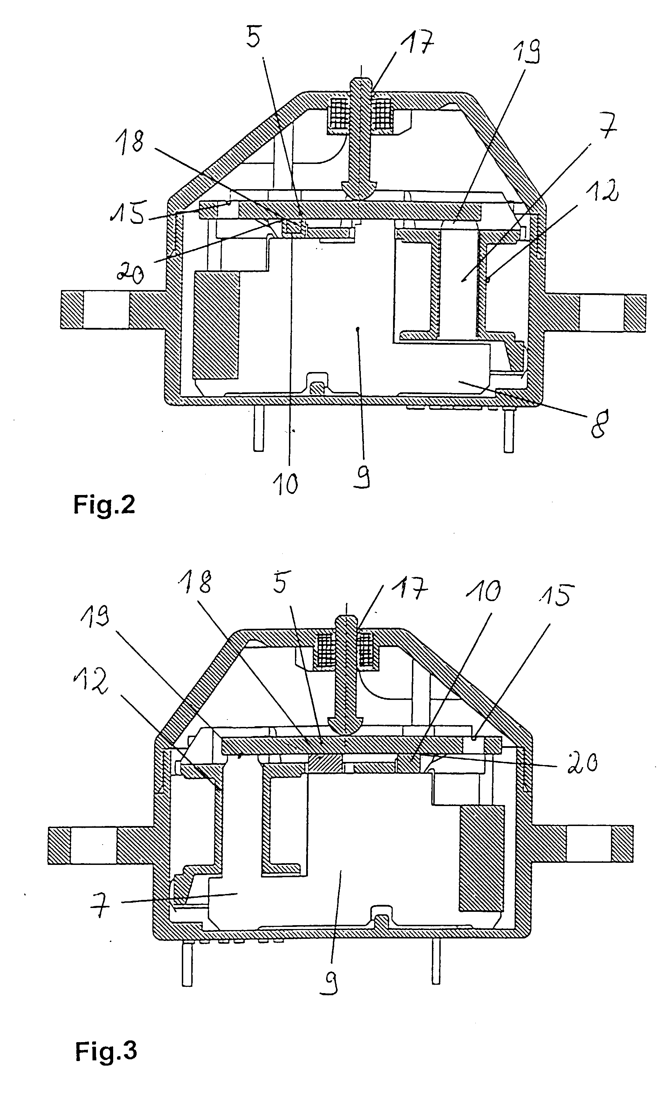

Die in den Figuren 1 bis 3 dargestellten Ausführungsformen weisen ferner einen elektrische und/oder magnetische Eingangsgrössen in mechanische Ausgangsgrössen wandelnden, feststehend gelagerten Geber auf. Dieser Geber ist vorzugsweise als quaderförmiges Piezoelement 18 ausgebildet und liegt an der vom Betätigungselement 4 abgewandten Seite am Anker 5 an. In der Ausführungsform gemäss den Figuren 1 und 2 ist das Piezoelement 18 im Bolzen 10 gelagert und kann gegebenenfalls sogar den Bolzen ersetzen. In der Ausführungsform nach Fig. 3 ist das Piezoelement 18 direkt auf das Joch 9 aufgesetzt.

Der Anker 5 liegt auf dem Bolzen 10, dem Piezoelement 18 und auf einer Polfläche 19 des Jochblechs 7 auf. Der Anker 5 ist dann durch das Federelement 15 mit Vorspannkraft belastet. Der magnetische Kreis ist geschlossen und der magnetische Dauerfluss wird vom Permanentmagneten 11 beispielsweise über das Jochblech 7, die Polfläche 19 des Jochblechs 7, den Anker 5 und das Jochblech 8 zurück zum Permanentmagneten 11 geführt. Beim Auftreten eines Fehlerstroms schwächt das magnetische Feld eines in die Auslösespule 12 eingespeisten Stromsignals das Feld des magnetischen Kreises im Bereich des Ankers 5. Im allgemeinen wird nun der Anker 5 unter der Wirkung des Federelementes 15 um eine Kante 20 des Bolzens 10 gekippt und führt dann das Betätigungselement 4 nach oben, welches sodann durch Aufschlagen auf das nicht dargestellte Schaltschloss ein Ausschalten des FI-Schalters bewirkt.

Hat die Auslösevorrichtung über einen längeren Zeitraum nicht mehr auslösen müssen, dann kann der Anker 5 aufgrund von Alterungs- und Umgebungseinflüssen (Fremdpartikel) auf der Polfläche festgesetzt sein. Die über die Spule 12 in den magnetischen Kreis eingespeiste Energie reicht dann nicht aus, um einen solchen "verklebten" Anker 5 zu kippen und um so eine Auslösung zu erreichen. Durch den unabhängig vom Anker 5 auf das Schaltschloss wirkenden und als Schlagankersystem ausgebildeten Notauslöser 17 kann dann jedoch die Auslösung erzielt werden. Alternativ oder zusätzlich kann die Auslösung auch durch das Piezoelement 18 erreicht werden. Hierbei wird die Eigenschaft des Piezoelements oder eines vergleichbar wirkenden Gebers ausgenutzt, nämlich elektrische und/oder magnetische Eingangsgrössen mit geringem Energieinhalt in mechanische Ausgangsgrössen zu wandeln, wie insbesondere eine verhältnismässig grosse Kraft, die aber bezogen auf den Kippvorgang des Ankers nur längs einem relativ kurzen Weges wirkt. Durch die beim Ansprechen des Piezoelementes 18 gebildete, bezogen auf den Energieinhalt der Eingangsgrösse grosse Kraftkomponente wird der verklebte Anker 5 gelöst und kann dann unter der Wirkung des Federelementes 15 stehend gekippt werden. Hierbei spielt es keine Rolle, dass das Piezoelement 18 den Anker 5 nur geringfügig verschiebt. Die Verschiebung erfolgt jedoch mit grosser Kraft und reicht aus, um den verklebten Anker 5 freizusetzen.

Bei der Ausführungsform nach den Figuren 1 und 2 ist das Piezoelement 18 in den Bolzen 10 integriert. Hierdurch ist ein zusätzliches Einbauteil entbehrlich. Bei der Ausführungsform nach Fig.3 ist sind das Piezoelement 18 und der Bolzen 10 unabhängig voneinander. Das Piezoelement 18 kann dann in unmittelbarer Nähe der Polfläche 19 auf das Joch 9 aufgesetzt werden und kann dann mit besonders grosser Kraft auf den Anker 5 einwirken und die Verklebung aufheben.

### Bezugszeichenliste

- 1: Boden
- 2: Deckel
- 3: Öffnung
- 4: Stössel
- 5: Anker
- 6: magnetischer Kreis
- 7, 8: Jochbleche
- 9: Joch
- 10: Bolzen
- 11: Permanentmagnet
- 12: Auslösespule
- 13, 14: Stromanschlüsse
- 15: Federelement
- 16: Spule
- 17: Notauslöser
- 18: Piezoelement
- 19: Polfläche
- 20: Kante

## Patentansprüche

1. Auslösevorrichtung für einen Schutzschalter, insbesondere einen Fehlerstrom-Schutzschalter, mit einem auf einem Joch (9) aufsitzenden, federbelasteten beweglichen Anker ( 5), einem mit dem Anker (5) gekoppelten Betätigungselement (4) und einem Notauslöser (17), dadurch gekennzeichnet, dass der Notauslöser (17) unabhängig vom Anker (5) auslösbar ausgebildet ist.

2. Vorrichtung nach Anspruch 1, dadurch gekennzeichnet, dass das Betätigungselement (4) auf den Anker (5) aufgesetzt, unabhängig vom Anker (5) bewegbar angeordnet und zumindest teilweise von einem Ferromagnetikum gebildet ist, und dass das Betätigungselement (4) Teil des als Schlaganker ausgebildeten Notauslösers (17) ist.

3. Vorrichtung nach Anspruch 1 oder 2, dadurch gekennzeichnet, dass zusätzlich ein feststehend gelagerter und auf der vom Betätigungselement (4) abgewandten Seite am Anker (5) anliegender Geber vorgesehen ist, welcher elektrische und/oder magnetische Eingangsgrössen in mechanische Ausgangsgrössen wandelt.

4. Vorrichtung nach Anspruch 3, dadurch gekennzeichnet, dass der Geber ein piezoelektrisches oder ein magnetostriktives Element (18) ist.

5. Vorrichtung nach einem der Ansprüche 1 bis 4, dadurch gekennzeichnet, dass der Anker (5) auf einem feststehenden Bolzen (10) und auf einer Polfläche (19) des mit dem Anker (5) zusammenwirkenden Jochs (9) aufsitzt, und um eine Kante (20) des Bolzens (10) drehbar ist.

6. Vorrichtung nach Anspruch 5, dadurch gekennzeichnet, dass der Geber zumindest Teil des Bolzens (10) ist.

7. Vorrichtung nach Anspruch 5, dadurch gekennzeichnet, dass der Geber auf das Joch (9) aufgesetzt ist.
